Europäisches Patentamt

European Patent Office

Office européen des brevets

(11) Publication number: **0 063 388**
**B1**

(12) **EUROPEAN PATENT SPECIFICATION**

(45) Date of publication of patent specification: **08.05.85**

(21) Application number: **82200328.1**

(22) Date of filing: **12.03.82**

(51) Int. Cl.⁴: **C 09 D 5/16, C 09 D 3/82**

(54) Method for marking underwater parts of marine structures.

(30) Priority: **02.04.81 GB 8110372**

(43) Date of publication of application:
**27.10.82 Bulletin 82/43**

(45) Publication of the grant of the patent:
**08.05.85 Bulletin 85/19**

(84) Designated Contracting States:
**BE DE FR NL**

(56) References cited:
**DE-A-2 754 786**
**US-A-3 702 778**

**CHEMICAL ABSTRACTS, vol. 88, no. 18, 1st May 1978, page 75, no. 122747m, Columbus Ohio (USA);**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Riches, Kenneth Maurice**
**c/o Thornton Research Centre**
**Chester Cheshire (GB)**
Inventor: **Shone, Edward Brian**
**c/o Thornton Research Centre**
**Chester Cheshire (GB)**

(74) Representative: **Aalbers, Onno et al**
**P.O. Box 302**
**NL-2501 CH The Hague (NL)**

Courier Press, Leamington Spa, England.

## Description

The invention relates to a method for marking underwater parts of a marine structure wherein a coating comprising a vulcanized silicone rubber is applied locally onto the outer surface of the structure, and to marine structures thus marked.

Identification of individual areas of underwater parts of marine structures, such as ships, buoys, fuel tanks, floating and fixed offshore platforms, and pipelines often gives rise to problems. Colour codes and/or painted numbers or other signs are unsuitable in most cases, because due to fouling by organisms, for example grasses, algae, barnacles, tube worms, serpula, oysters, ascidia, and bryozoa, the said codes, numbers and signs are no longer identifiable after a relatively short period of time.

For that reason it is often difficult, e.g. for divers, to locate certain parts and areas of underwater structures which is often necessary for maintenance and repair.

There has now been found a method for marking underwater parts of marine structures which yields marks which can be easily detected and identified, which are not prone to rapid fouling, and accordingly remain identifiable for long periods of time.

According to the invention there is provided a method for marking underwater parts of a marine structure, which is characterized in that the coating used further comprises a fluorescent pigment of an organic resin with 1 to ·5% by weight of a dye, and optionally a fluid organic compound which is liquid at the temperature prevailing in sea water and which has a boiling point at atmospheric pressure of at least 250°C.

Vulcanized silicone rubber can be prepared from silicone gums, which are highly linear high-molecular weight organosiloxane polymers consisting essentially of alternating atoms of silicon and oxygen as a polymeric backbone with organic substituents attached to the silicon atoms of the polymeric backbone. Vulcanized silicone rubber may be prepared by heat curing with various catalysts (such as peroxides) or by radiation curing of a silicone gum which, e.g., substantially consists of a polydisubstituted siloxane. All or the predominant part of the organic substituents may be methyl units, the remainder being vinyl- and/or phenyl units.

Vulcanized silicone rubbers may also be prepared by vulcanizing at ambient temperature silicone gums which contain silanol end groups (the so-called (RTV gums). All or the predominant part of the substituents in the RTV gums may be hydrocarbyl groups (in particular methyl groups), the remainder may be ethyl-, phenyl- or substituted hydrocarbyl groups, such as chlorophenyl-, fluoropropyl- or cyanoethyl groups. (RTV gums=room, temperature vulcanizable gums).

RTV gums in which the organic substituents contain or consist of silicon-free segments which are constituted of recurrent units (in particular polymeric segments) as described in European Patent Publication 0032597 are also very suitable to be vulcanized to silicone rubbers.

The polymeric segments are preferably linked to the silicon atoms via alkylene or alkylidene groups, and very suitably are derived from monomers containing ethylenic unsaturation. The said monomers may, e.g., consist of unsaturated acids or derivates thereof (such as esters, e.g. esters of acrylic and/or methacrylic acid) and/or comprise styrene. Polymeric segments based on copolymers of styrene and butylacrylate are very suitable.

The preparation of vulcanized silicone rubbers from silicone gums at ambient temperatures may be carried out by two different methods, viz. the one-pack RTV-system and the two-pack RTV-system as described in the British Patent Specification 1,581,727.

In order to lengthen the period in which the coating according to the invention is not fouled, it is of advantage that the coating also comprises a fluid organic compound which is liquid at the temperatures prevailing in sea water and preferably is metal-free. Exudation of such a fluid organic compound from the silicone rubber is of advantage. Preferably such a fluid organic compound has a boiling point of at least 250°C at atmospheric pressure, in order to avoid that it is evaporated or exuded at too high a rate from the coating.

Very suitable fluid organic compounds are silicon fluids, which consist of poly-dihydrocarbyl siloxanes (of which the hydrocarbyl groups may be substituted with hetero-atoms). The hydrocarbyl groups may be alkyl groups (in particular methyl groups) or all or part thereof may be aryl groups (in particular phenyl groups). Silicone fluids of which the hydrocarbyl groups consist partly of methyl groups and partly of phenyl groups have been found to be in particular suitable.

Another type of very suitable fluid organic compounds consists of low molecular weight polyolefins, such as ethylene/propylene copolymers, and in particular polyisobutene with a molecular weight up to about 5,000, e.g., from 300—500.

Other types of fluid organic compounds which are suitable are low molecular weight polydienes, polyesters, polyisocyanates, polyurethanes, polyepoxides, lubricating oils, such as technical white oils, and plasticizers (e.g., esters of fatty acids, which may be substituted with hetero atoms or -groups, esters of phosphoric acid, halogenated hydrocarbons).

In case the fluid organic compound is not sufficiently compatible with the silicone rubber to ensure a very long period of anti-fouling activity, the fluid organic compound is very suitably incorporated in the silicone rubber in an encapsulated form, e.g. as described in British Patent Specification 1,581,727.

The amount of the fluid organic compound present may vary between wide limits. Amounts from 0.1 to 100 pbw on 100 pbw of vulcanized silicone rubber are very suitable (pbw=parts by weight).

Fluorescent compounds are inorganic or organic compounds (in particular dyes) which convert onfalling light of a certain wave length (the exciting light) to light of a longer wave length which is emitted after a short period of time (e.g., less than $10^{-2}$ sec.). In general, the exciting light consists of ultraviolet light or visible light of the blue end of the spectrum, and the light emitted has wave lengths in the visible part of the spectrum. In the preferred cases the emitted light has the same hue as light reflected by the dye, because the reflected colour is thus reinforced with the emitted colour producing hues which appear extraordinarily bright to the eye.

This effect is achieved by incorporating a suitable organic dye in the fluorescent pigment which is to be used according to the invention. It is of advantage that the dye incorporated fluoresces under the influence of exciting light in the visible part of the spectrum (in other words: shows daylight fluorescence) because in that case by irradiation with electric torch light as used during working under water (e.g. by divers), the marked areas of the surface of the marine structures are clearly visible and identifiable.

Very suitably the pigments consist for the greater part of organic resins in which the dyes have been incorporated, in general low concentrations (e.g., 1—5% w). Such pigments are commercially available. The choice of the pigment to be used will depend on the type of colour and intensity thereof which is desired under the prevailing circumstances at the underwater parts of the marine structure.

The amount of fluoresecent pigments present in the coatings according to the invention may vary between wide limits. Amounts from 0.1 to 20% w, on vulcanized silicone rubber are very suitable.

Although the vulcanized silicone rubber may be applied as such (if desired in admixture with the fluorescent pigment) onto the outer surface of the marine structure, it is preferred to treat the said surface with a mixture which comprises the silicone gum to be vulcanized, the fluorescent pigment and other components (if any), and to vulcanize the silicone gum in situ.

The coating (or the mixture from which the coating is to be formed in situ) can be applied onto the marine structure by any suitable means, such as brushing, spraying and the like.

If desired, materials which enhance the strength of the silicone rubber may also be incorporated. As examples may be mentioned fibrous materials (e.g., glass fibres, glass flakes or nylon fibres) and powdered polymers, such as polytetrafluorethylene. It will be understood that the marking according to the invention need not be carried out under water. It is preferred to mark the underwater parts of the marine structures before these structures are put into the water.

In order to protect other parts of the marine structure against fouling than those to be marked, it is of course possible to apply a suitable coating onto the said parts which may, e.g., comprise the same components as those according to the invention except the fluorescent pigment.

The surface to be coated according to the invention may have been pretreated in order to increase the adhesion of the coating according to the invention thereto, e.g., by sand-blasting and/or application of an adhesive layer. Other coatings may also have been applied, e.g., an anti-corrosive coating and/or an anti-fouling coating of prior art. The coatings according to the invention may also comprise metal-containing anti-fouling agents of prior art.

It is also possible to apply the coating according to the invention onto the outer surface of the marine structure by application onto the said outer surface of a flexible sheet the outermost layer of which comprises a vulcanized silicone rubber and a fluorescent pigment. The flexible sheet very suitably consists of a fabric, which may for example be a woven fabric of e.g. glass, polypropylene, nylon or polyester yarn, which woven fabric may have been impregnated with a vulcanized silicone rubber, or of a tough plastics film of e.g. oriented polyester or polypropylene film. The coated flexible sheet is very conveniently secured to the marine structure by wrapping around an underwater surface thereof and securing by any convenient means, e.g. by clamps and/or clamping bands and/or frames. The coating according to the invention may also be applied onto non-flexible sheets, such as glass or metal sheets, which are very suitably secured to the marine structures by any convenient means as described above. They may also be self-clamping.

The invention also relates to marine structures which have been marked by the method according to the invention.

The invention also relates to mixtures which, when applied onto a surface, can form a coating layer by vulcanization, which mixtures comprises a silicone gum and a fluorescent pigment, and to sheets which contain such a vulcanized layer onto their surface.

Example 1
The following ingredients were intimately mixed:

| | |
|---|---|
| a commercial organo-polysiloxane which contained grafted polymeric segments based on styrene (about 20—25% w) and butyl-acrylate (about 30—40% w) | 100 p.b.w. |
| a commercial catalyst consisting of a blend of a tin salt and ethylsilicate | 4 p.b.w. |
| a commercial dimethylpolysiloxane oil | 20 p.b.w. |
| a commercial daylight fluorescent orange pigment | 10 p.b.w. |

The mixture

The mixture was applied to a fibre glass panel which had been precoated with a conventional anti-rust system.

The resulting coating showed very good visibility underwater when illuminated.

Example 2

The following ingredients were intimately mixed:

| | |
|---|---|
| a commercial RTV silicone gum | 100 p.b.w. |
| a commercial catalyst consisting of a paste which contains dibutyltin dilaurate | 20 p.b.w. |
| a commercial dimethyl-polysiloxane oil | 20 p.b.w. |
| a commercial daylight fluorescent orange pigment | 10 p.b.w. |

The mixture was applied to a fibre glass panel as described in Example 1, and the coating showed very good visibility under water when illuminated.

Examples 3 and 4

These Examples were similar to Examples 1 and 2 respectively, the difference being that instead of a commercial dimethylpolysiloxane oil a polyisobutene with a molecular weight of 350 was used. The same results as in Examples 1 and 2 were achieved.

## Claims

1. A method for marking underwater parts of a marine structure, wherein a coating comprising a vulcanized silicone rubber is applied locally onto the outer surface of the structure, characterized in that the coating used further comprises a fluorescent pigment of an organic resin with 1 to 5% by weight of a dye, and optionally a fluid organic compound which is liquid at the temperature prevailing in sea water and which has a boiling point at atmospheric pressure of at least 250°C.

2. A method according to claim 1 in which the fluid organic compound is a silicone fluid.

3. A method according to claim 1, in which the fluid organic compound is a polyisobutene with a molecular weight up to about 5000.

4. A method according to any one of claims 1—3, in which an organic dye is used.

5. A method according to claim 4, in which the organic dye shows daylight fluorescence.

6. A method according to any one of claims 1 to 5, in which the coating is applied by treating the outer surface of underwater parts of a marine structure with a mixture of a silicone gum and a fluorescent pigment, and vulcanizing the silicone gum in situ.

7. A marine structure marked according to the method of any one of the preceding claims.

8. A sheet provided with a coating of a vulcanized silicone gum and a fluorescent pigment on its surface.

## Patentansprüche

1. Verfahren zur Kennzeichnung von Unterwasserteilen von Konstruktionen auf See oder Schiffen, wobei der Überzug, enthaltend einen vulkanisierten Silicon-Gummi örtlich auf die Außenfläche aufgetragen ist, dadurch gekennzeichnet, daß der Überzug zusätzlich fluoreszierendes Pigment eines organischen Harzes mit 1 bis 5 Gew.-% eines Farbstoffes enthält und gegebenenfalls eine fließfähige organische Verbindung, die bei der Temperatur des Seewassers flüssig ist und unter Atmosphärendruck einen Siedepunkt von zumindest 250°C besitzt.

2. Verfahren nach Anspruch 1, worin die fließfähige organische Verbindung ein flüssiges Silicon ist.

3. Verfahren nach Anspruch 1, worin die fließfähige organische Verbindung ein Polyisobuten mit einem Molekulargewicht bis etwa 5000 ist.

4. Verfahren nach einem der Ansprüche 1 bis 3, worin ein organischer Farbstoff angewandt wird.

5. Verfahren nach Anspruch 4, worin der organische Farbstoff bei Tageslicht fluoresziert.

6. Verfahren nach einem der Ansprüche 1 bis 5, wobei der Überzug aufgebracht wird durch Behandeln der Außenfläche der Unterwasserteile mit einem Gemisch eines Siliconkautschuks und eines fluoreszierenden Pigments und Vulkanisieren des Siliconkautschuks in situ.

7. Konstruktion auf See markiert nach dem Verfahren einer der vorhergehenden Ansprüche.

8. Folie mit einem Überzug aus einem vulkanisierten Silicongummi und einem fluoreszierenden Pigment an der Oberfläche.

## Revendications

1. Procédé pour marquer les parties immergées d'une structure marine, ou l'on applique localement un revêtement comprenant un caoutchouc siliconé vulcanisé à la surface externe de la structure, caractérisé en ce que le revêtement utilisé comprend un outre un pigment fluorescent d'une résine organique avec de 1 à 5% en poids d'une teinture, et éventuellement un composé organique fluide qui est liquide à la temperature prédominant dans l'eau de mer et qui a un point d'ébullition à la pression atmosphérique d'au moins 250°C.

2. Procédé selon la revendication 1, où le composé organique fluide est un fluide siliconé.

3. Procédé selon la revendication 1, où le composé organique fluide est polyisobutène avec un poids moléculaire allant jusqu'à environ 5000.

4. Procédé selon l'une quelconque des revendications 1—3, où l'on utilise une teinture organique.

5. Procédé selon la revendication 4, où le teinture organique présente une fluorescence de jour.

6. Procédé selon l'une quelconque des revendications 1—5, où le revêtement est applique en traitant la surface externe des parties immergées d'uen structure marine avec un mélange d'une gomme siliconée et d'un pigment fluorescent, et en vulcanisant la gomme siliconée *in situ*.

7. Structure marine marquée selon le procédé de l'une quelconque des revendications précédentes.

8. Feuille munie d'un revêtement d'une gomme siliconée vulcanisée et d'un pigment fluorescent à sa surface.